# EUROPEAN PATENT SPECIFICATION

(11) **EP 1 568 286 B1**
(45) Date of publication and mention of the grant of the patent: **21.02.2007**
(21) Application number: 03777299.3
(22) Date of filing: 05.12.2003
(51) Int. Cl.: A23L 2/56, A23L 2/66, A23L 1/305, A23L 1/015

(54) **METHOD OF DIMINISHING BITTERNESS OF AMINO ACID**
VERFAHREN ZUR VERRINGERUNG DER BITTERKEIT VON AMINOSÄURE
PROCEDE POUR ATTENUER L'AMERTUME DE L'ACIDE AMINE

(30) Priority: 06.12.2002 JP 2002354790
(43) Date of publication of application: 31.08.2005
(73) Proprietor: KYOWA HAKKO KOGYO CO., LTD., Chiyoda-ku, Tokyo 100-8185 (JP)
(72) Inventor: KAWABE, Hideo, Kyowa Hakko Kogyo Co., Ltd., Tokyo 100-8185 (JP); SHIBASAKI, Takeshi, Kyowa Hakko Kogyo Co., Ltd., Tokyo 100-8185 (JP); UCHIDA, Takahiro, Nishinomiya-shi, Hyogo 662-0076 (JP)
(74) Representative: Williams, Aylsa
(86) International application number: PCT/JP2003/015609
(87) International publication number: WO 2004/052125

(56) References cited:
- EP-A- 1 358 878
- JP-A- 60 049 751
- JP-A- 62 294 069
- JP-A- 2003 235 512

## Description

### Technical Field

The present invention relates to amino acid-containing drinks and a method for reducing the bitterness of amino acids.

### Background Art

In recent years, there is a growing demand for food or drink, nutritional supplement and the like which contain various amino acids.

Some of the amino acids are known to have a bitter taste. When such amino acids are employed as ingredients of food or drink or the like, measures are taken to mask the bitterness, for example, by addition of sweeteners or by coating such as sugar-coating.

However, in order to mask the bitterness, sweeteners must be used in large amounts, which leads to changes in the taste of food or drink. In particular, food or drink having a weak taste such as refreshing drink is much affected. Further, coating is applicable only to limited kinds of products such as tablets.

Thus, a need exists for a method different from the above techniques for reducing the bitterness of amino acids.

It is known that the amino acid arginine has the effect of reducing the bitterness of amino acids [Chemical Senses, 20, 609-623 (1995)]. However, arginine itself has a bitter taste and a characteristic odor, and thus may spoil the flavor of food or drink.

Ornithine is known to have a slimming effect (J. Nutr., 1979, Vol. 109, No. 4, p. 724-729) and a wound-healing effect (Ann. Surg., 1987, Vol. 206, p. 674-678) and is commercially available in the form of capsules in the United States.

Known compositions comprising ornithine and amino acids include an anti-obesity agent comprising 13 kinds of amino acids and ornithine (Japanese Published Unexamined Patent Application No. 24977/94) and a composition comprising 13 kinds of amino acids, a sugar and ornithine (Japanese Published Unexamined Patent Application No. 72669/00).

It is known that ornithine citrate improves the taste of food or drink (Japanese Published Unexamined Patent Application No. 144088/03), but it is not known that ornithine reduces the bitterness of amino acids.

### Disclosure of the Invention

The present invention relates to the following:
(1) A method for reducing the bitterness of an amino acid which comprises adding ornithine to the amino acid.
(2) A method for reducing the bitterness of an amino acid-containing composition which comprises having ornithine contained in the amino acid-containing composition.
(3) The method according to the above (1) or (2), wherein the amino acid is an amino acid having a bitter taste.
(4) The method according to the above (3), wherein the amino acid having a bitter taste is valine, leucine, isoleucine or arginine.
(5) The method according to any one of the above (1) to (4), which comprises having 0.01 to 100 parts by weight of ornithine contained per part by weight of the amino acid having a bitter taste.
(6) The method according to any one of the above (2) to (5), wherein the amino acid-containing composition is an amino acid-containing drink.
(7) Use of ornithine to reduce the bitterness of an amino acid containing composition.
(8) Use according to the above (7), wherein the amino acid having a bitter taste is valine, leucine, isoleucine or arginine.
(9) Use according to the above (7) or (8), wherein the amino acid containing composition comprises 0.01 to 100 parts by weight of ornithine contained per part by weight of the amino acid having a bitter taste.
(10) Use according to any one of the above (7) to (9), wherein the amino acid containing composition is an amino acid-containing drink.

In the present invention, the amino acids include glycine, alanine, valine, leucine, isoleucine, serine, threonine, aspartic acid, glutamic acid, asparagine, glutamine, arginine, lysine, cysteine, cystine, methionine, phenylalanine, tyrosine, tryptophan, histidine, proline, etc. and their salts. The amino acids may be either in the L-form or in the D-form, but L-form amino acids are preferred.

The salts include, though variable according to the kind of amino acid, metal salts such as sodium salt, potassium salt and magnesium salt, and inorganic acid addition salts such as hydrochloride. These amino acids may be used singly or as a combination of two or more kinds of amino acids.

The amino acids may be any of the amino acids mentioned above, but those having a bitter taste are preferred. The amino acids having a bitter taste include valine, leucine, isoleucine, arginine, phenylalanine, tryptophan, histidine, methionine and lysine, preferably, valine, leucine, isoleucine and arginine, more preferably, valine, leucine and isoleucine.

Ornithine is not included in the amino acids as defined in the present invention.

Ornithine may be in the free state, but its hydrochloride is preferably used.

The bitterness of an amino acid can be reduced by adding ornithine to the amino acid.

The amino acid may be present as such or may be contained in a composition.

In order to reduce the bitterness of an amino acid-containing composition due to the bitterness of the amino acid, ornithine is added and mixed with the composition, if necessary with stirring, when the composition is prepared or used.

The amino acid-containing composition may be any of compositions such as drinks, foods and pharmaceutical compositions, so long as it contains an amino acid. Preferred examples are compositions in the form of powder, granules or liquid, among which liquid compositions such as drinks are more preferred.

The amino acid-containing compositions are prepared by the same methods as those ordinarily used for preparing each composition, except for the addition of an amino acid.

In the present invention, the drinks include refreshing drinks, carbonated drinks, drinks containing fruit juice, coffee drinks, tea drinks (e.g., oolong tea drinks and black tea drinks), alcoholic drinks, lactic acid bacteria drinks, nutritional drinks, etc.

The amino acid-containing drinks can be produced by the same methods as those generally used for producing each drink, except for the addition of an amino acid. To the drinks may be added, according to need, additives such as vitamins, citric acid, sucralose, aspartame, thaumatin, trehalose, calcium, magnesium, sodium, sugar alcohols (e.g., maltitol), flavors, coloring agents, preservatives and antioxidants. It is also possible to prepare carbonated drinks by charging carbon dioxide into the drinks with pressure.

In the present invention, the foods include any foods other than the above drinks, for example, dairy products (e.g., butter, cheese, yogurt, processed milk and skim milk), frozen dessert, meat products (e.g., ham, sausage and hamburger), confectionery (e.g., cookies, jellies, chewing gums, candies and snacks), bread, noodles, pickles, smoked fish and meat, dried fish, preserved foods boiled down with soy, salt cured foods, seasonings, soups and dressings. Liquid foods are also included in the foods.

The foods may be in the forms such as bottled foods, canned foods, retort pouched foods, powdered foods, sheet-shaped foods and tablet foods.

The amino acid-containing foods can be produced and processed by the same methods as those generally used for producing foods, except for the addition of an amino acid. The foods can also be produced by using various granulating methods, puffing methods, extrusion methods, etc. etc.

To the amino acid-containing foods may be added generally employed food additives such as sweeteners, coloring agents, preservatives, thickening stabilizers, antioxidants, color developing agents, bleaching agents, fungicides, gum bases, enzymes, wax, acidulants, seasonings, emulsifiers, nutrient supplements, flavors and spice extracts.

When the amino acid-containing composition is a pharmaceutical composition, an amino acid is mixed with a pharmaceutically active ingredient, if necessary together with an excipient, a binder, a disintegrating agent, a lubricant, a dispersing agent, a suspending agent, an emulsifier, a diluent, a buffer, an antioxidant, an antibacterial agent, etc. to prepare oral preparations such as tablets, powders, granules, emulsions, syrups and liquid preparations by arbitrary methods well known in the technical field of pharmaceutics.

The amount of amino acid in the amino acid-containing composition is not specifically limited, but it is desirable that 0.1 to 100 parts by weight of amino acid is contained in 1000 parts by weight of the composition of the present invention.

When the amino acid-containing composition is a drink, the total amino acid concentration in the drink is preferably 400 to 15000 mg/l.

Ornithine can be added at any step of the process for preparing the amino acid-containing composition for the purpose of having ornithine contained in the amino acid-containing composition.

Ornithine may be used as such or may be added as an ornithine-containing composition.

The ornithine-containing composition may be in any form, for example, any of the forms similar to those of the above drinks, foods and pharmaceutical compositions. The composition can be used as an agent for reducing the bitterness of an amino acid.

The amount of ornithine or ornithine-containing composition to be added varies according to the kind of an amino acid, but is 0.01 to 100 parts by weight, preferably 0.01 to 10 parts by weight, further preferably 0.1 to 2 parts by weight, as the weight of ornithine, for one part by weight of an amino acid having a bitter taste. When the amino acid-containing composition does not contain any amino acid having a bitter taste, the amount of ornithine or ornithine-containing composition to be added is not specifically limited, but it is desirable that 0.1 to 100 parts by weight of ornithine is contained in 1000 parts by weight of the composition of the present invention.

The drinks produced by the present invention are amino acid-containing drinks as described above which contain 1 to 12 kinds of amino acids and further contain ornithine.

As ornithine is substantially tasteless, the drinks can be used as drinks having reduced bitterness of amino acids while retaining their original flavors.

The drinks can be produced by the same methods as those generally used for producing drinks, except for the addition of ornithine and 1 to 12 kinds of amino acids. To the drinks may be added, according to need, additives such as vitamins (e.g., vitamin C), citric acid, sucralose, aspartame, thaumatin, trehalose, calcium, magnesium, sodium and sugar alcohols. It is also possible to prepare carbonated drinks by charging carbon dioxide into the drinks with pressure.

Further, if necessary, the pH of the drinks may be adjusted using pH adjusting agents such as acetic acid, lactic acid and sodium hydrogencarbonate.

The amino acids may be any 1 to 12 kinds of amino acids among the amino acids mentioned above, but those having a bitter taste are preferred.

When the drink is a drink for slimming diet, it is desirable that the drink contains arginine, if necessary with proline, lysine, alanine, etc. When the drink is a drink for improving muscular fatigue, it is desirable that the drink contains valine, isoleucine and leucine, which are branched-chain amino acids, if necessary with arginine. In this case, the ratio of valine:isoleucine:leucine is preferably 0.5-1.5:0.5-1.5:1.3-2.5, more preferably 1:1:2 or 1:1:1.6.

The amount of amino acid in the drink is not specifically limited, but the total amino acid concentration in the drink is preferably 400 to 15000 mg/l. It is further desirable that the drink of the present invention contains 250 to 5000 mg/l arginine and 20 to 3000 mg/l valine, isoleucine and leucine as a group.

The amount of ornithine to be added is 0.01 to 100 parts by weight, preferably 0.01 to 10 parts by weight, further preferably 0.1 to 2 parts by weight, for one part by weight of an amino acid having a bitter taste. When the drink does not contain any amino acid having a bitter taste, the amount of ornithine to be added is not specifically limited, but it is desirable that 0.1 to 100 parts by weight of ornithine is contained in 1000 parts by weight of the drink.

After the drink is produced, it may be subjected to sterilization, e.g., heat treatment at 120°C for 30 seconds to 30 minutes, according to need.

### Best Modes for Carrying Out the Invention

### Example 1

L-Isoleucine, L-leucine and L-valine were respectively dissolved in a 10 mmol/l aqueous solution of potassium chloride to prepare a 100 mmol/l (13.1 g/l) L-isoleucine solution, a 150 mmol/l (19.7 g/l) L-leucine solution and a 300 mmol/l (35.1 g/l) L-valine solution.

L-Ornithine hydrochloride was added and dissolved into each of the amino acid solutions to give concentrations of 1 mmo1/l (0.17 g/1), 10 mmo1/l (1.7 g/1) and 100 mM (16.9 g/l) Similarly, L-arginine was added and dissolved into each of the amino acid solutions to give concentrations of 1 mmol/l (0.17 g/1), 10 mmol/1 (1.7 g/l) and 100 mM (17.4 g/l) All of the amino acids used above are products of Kyowa Hakko Kogyo Co., Ltd.

Solutions of quinine hydrochloride having the concentrations shown in Table 1 were prepared, and scores for the bitterness of quinine hydrochloride at the respective concentrations were set as indicated in Table 1.

**Table 1**

| Score | Concentration of quinine hydrochloride (mmol/l) |
|---|---|
| 0 | 0.010 |
| 0.5 | 0.018 |
| 1.0 | 0.030 |
| 1.5 | 0.056 |
| 2.0 | 0.100 |
| 2.5 | 0.180 |
| 3.0 | 0.300 |
| 3.5 | 0.560 |
| 4.0 | 1.000 |

Sensory evaluation was made by 8 trained panelists on the bitterness of each of the amino acid solutions prepared above and the bitterness of the quinine hydrochloride solutions.

The bitterness of each amino acid solution was compared with the bitterness of the quinine hydrochloride solutions. Each amino acid solution was given a score corresponding to the score of the quinine hydrochloride solution having the same degree of bitterness, and the average of the scores given by 8 panelists was obtained.

The evaluation results on the bitterness of the amino acid solutions to which ornithine hydrochloride was added are shown in the following tables: Table 2, isoleucine solutions; Table 3, leucine solutions; Table 4, valine solutions.

In the tables, the concentration refers to the concentration of ornithine hydrochloride or arginine.

The mark * refers to the risk in the comparison of the bitterness of a solution which does not contain ornithine hydrochloride or arginine with that of a solution containing 100 mmol/l ornithine hydrochloride or arginine as follows: *, <0.100; **, <0.050; ***, <0.010; ****, <0.001.

**Table 2**

| Concentration (mmol/l) | Ornithine hydrochloride | Arginine |
|---|---|---|
| 0 | 1.5 | 1.5 |
| 1 | 1.4 | 1.5 |
| 10 | 1.3 | 1.4 |
| 100 | 0.8** | 0.9* |

**Table 3**

| Concentration (mmol/l) | Ornithine hydrochloride | Arginine |
|---|---|---|
| 0 | 1.9 | 1.9 |
| 1 | 1.3 | 1.7 |
| 10 | 1.3 | 1.6 |
| 100 | 0.7**** | 1.2** |

**Table 4**

| Concentration (mmol/l) | Ornithine hydrochloride | Arginine |
|---|---|---|
| 0 | 1.8 | 1.8 |
| 1 | 1.6 | 1.6 |
| 10 | 1.1 | 1.5 |
| 100 | 0.9*** | 1.4*** |

As shown in Tables 2 to 4, ornithine hydrochloride exhibited bitterness-reducing effect superior to that of arginine on the bitterness due to any of isoleucine, leucine and valine.

Arginine showed a tendency to give an unfavorable effect on the flavor of each amino acid solution compared with ornithine hydrochloride.

### Example 2

An amino acid drink for slimming diet was prepared by dissolving 5 g of maltitol, 0.3 g of citric acid, 0.5 g of flavor, 500 mg of arginine (product of Kyowa Hakko Kogyo Co., Ltd.; the same shall apply hereinafter) and 500 mg of ornithine hydrochloride (product of Kyowa Hakko Kogyo Co., Ltd.; the same shall apply hereinafter) in 200 ml of distilled water.

### Example 3

An amino acid drink to be used for improving muscular fatigue was prepared by dissolving 5 g of maltitol, 0.3 g of citric acid, 0.5 g of flavor, 400 mg of arginine, 400 mg of leucine, 200 mg of isoleucine, 200 mg of valine and 500 mg of ornithine hydrochloride in 200 ml of distilled water.

### Example 4

An amino acid drink to be used for improving muscular fatigue was prepared by dissolving 5 g of maltitol, 0.3 g of citric acid, 0.5 g of flavor, 400 mg of leucine, 200 mg of isoleucine, 200 mg of valine and 200 mg of ornithine hydrochloride in 200 ml of distilled water.

### Example 5

An amino acid drink to be used for improving muscular fatigue was prepared by dissolving 5 g of maltitol, 0.3 g of citric acid, 0.5 g of flavor, 400 mg of leucine, 200 mg of isoleucine, 200 mg of valine and 800 mg of ornithine hydrochloride in 500 ml of distilled water.

### Example 6

An amino acid drink to be used for improving muscular fatigue was prepared by dissolving 5 g of maltitol, 0.3 g of citric acid, 0.5 g of flavor, 400 mg of leucine, 200 mg of isoleucine, 200 mg of valine, 200 mg of phenylalanine and 1000 mg of ornithine hydrochloride in 500 ml of distilled water.

### Example 7

An amino acid drink for slimming diet is prepared by dissolving 5 g of maltitol, 0.3 g of citric acid, 0.5 g of flavor, 500 mg of arginine (product of Kyowa Hakko Kogyo Co., Ltd.; the same shall apply hereinafter), 500 mg of lysine and 500 mg of ornithine hydrochloride (product of Kyowa Hakko Kogyo Co., Ltd.; the same shall apply hereinafter) in 200 ml of distilled water.

### Industrial Applicability

The present invention provides a method for producing amino acid-containing drinks with reduced bitterness and a method for reducing the bitterness of amino acids and use of ornithine to reduce the bitterness of an amino acid containing composition.

## Claims

1. A method for reducing the bitterness of an amino acid which comprises adding ornithine to the amino acid.

2. A method for reducing the bitterness of an amino acid-containing composition which comprises having ornithine contained in the amino acid-containing composition.

3. The method according to Claim 1 or 2, wherein the amino acid is an amino acid having a bitter taste.

4. The method according to Claims 3, wherein the amino acid having a bitter taste is valine, leucine, isoleucine or arginine.

5. The method according to any one of Claims 1 to 4, which comprises having 0.01 to 100 parts by weight of ornithine contained per part by weight of the amino acid having a bitter taste.

6. The method according to any one of Claims 2 to 5, wherein the amino acid-containing composition is an amino acid-containing drink.

7. Use of ornithine to reduce the bitterness of an amino acid containing composition.

8. Use according to claim 7 wherein the amino acid having a bitter taste is valine, leucine, isoleucine or arginine.

9. Use according to claim 7 or claim 8 wherein the amino acid containing composition comprises 0.01 to 100 parts by weight of ornithine contained per part by weight of the amino acid having a bitter taste.

10. Use according to any one of claims 7 to 9 wherein the amino acid containing composition is an amino acid-containing drink.

## Patentansprüche

1. Verfahren zur Verringerung der Bitterkeit einer Aminosäure, wobei man Ornithin zu der Aminosäure zugibt.

2. Verfahren zur Verringerung der Bitterkeit einer Aminosäure-enthaltenden Zusammensetzung, wobei man Ornithin in die Aminosäure-enthaltende Zusammensetzung aufnimmt.

3. Verfahren nach Anspruch 1 oder 2, wobei die Aminosäure eine Aminosäure mit einem bitteren Geschmack ist.

4. Verfahren nach Anspruch 3, wobei die Aminosäure mit einem bitteren Geschmack Valin, Leucin, Isoleucin oder Arginin ist.

5. Verfahren nach einem der Ansprüche 1 bis 4, wobei man 0,01 bis 100 Gewichtsteile Ornithin pro Gewichtsteil der Aminosäure mit einem bitteren Geschmack aufnimmt.

6. Verfahren nach einem der Ansprüche 2 bis 5, wobei die Aminosäure-enthaltende Zusammensetzung ein Aminosäure-enthaltendes Getränk ist.

7. Verwendung von Ornithin zur Verringerung der Bitterkeit einer Aminosäure-enthaltenden Zusammensetzung.

8. Verwendung nach Anspruch 7, wobei die Aminosäure mit einem bitteren Geschmack Valin, Leucin, Isoleucin oder Arginin ist.

9. Verwendung nach Anspruch 7 oder 8, wobei die Aminosäure-enthaltende Zusammensetzung 0,01 bis 100 Gewichtsteile Ornithin pro Gewichtsteil der Aminosäure mit einem bitteren Geschmack enthalten umfaßt.

10. Verwendung nach einem der Ansprüche 7 bis 9, wobei die Aminosäure-enthaltende Zusammensetzung ein Aminosäure-enthaltendes Getränk ist.

## Revendications

1. Procédé pour réduire l'amertume d'un aminoacide, qui comprend l'addition d'ornithine à l'aminoacide.

2. Procédé pour réduire l'amertume d'une composition contenant un aminoacide, qui comprend la présence d'ornithine dans la composition contenant un aminoacide.

3. Procédé suivant la revendication 1 ou 2, dans lequel l'aminoacide est un aminoacide ayant un goût amer.

4. Procédé suivant la revendication 3, dans lequel l'aminoacide ayant un goût amer est la valine, la leucine, l'isoleucine ou l'arginine.

5. Procédé suivant l'une quelconque des revendications 1 à 4, qui comprend l'incorporation de 0,01 à 100 parties en poids d'ornithine par partie en poids de l'aminoacide ayant un goût amer.

6. Procédé suivant l'une quelconque des revendications 2 à 5, dans lequel la composition contenant un aminoacide est une boisson contenant un aminoacide.

7. Utilisation d'ornithine pour réduire l'amertume d'une composition contenant un aminoacide.

8. Utilisation suivant la revendication 7, dans laquelle l'aminoacide ayant un goût amer est la valine, la leucine, l'isoleucine ou l'arginine.

9. Utilisation suivant la revendication 7 ou la revendication 8, dans laquelle la composition contenant un aminoacide comprend une quantité de 0,01 à 100 parties en poids d'ornithine présente par partie en poids de l'aminoacide ayant un goût amer.

10. Utilisation suivant l'une quelconque des revendications 7 à 9, dans laquelle la composition contenant un aminoacide est une boisson contenant un aminoacide.
